# EUROPEAN PATENT SPECIFICATION

(11) **EP 0 531 628 B1**
(45) Date of publication and mention of the grant of the patent: **25.09.1996**
(21) Application number: 92109429.8
(22) Date of filing: 04.06.1992
(51) Int. Cl.: G02B 6/44

(54) **Device for dividing optical fibre cables and wires**
Vorrichtung zum Aufteilen optischer Kabel und Leitungen
Dispositif pour partager des câbles et conducteurs optiques

(30) Priority: 15.06.1991 DE 4119829
(43) Date of publication of application: 17.03.1993
(73) Proprietor: Walter Rose GmbH & Co. KG, D-58099 Hagen (DE)
(72) Inventor: Penz, Heinz, W-5800 Hagen 1 (DE); Künzl, Dieter, W-5800 Hagen 8 (DE); Hagemeister, Klaus, W-3000 Hannover 61 (DE); Fremgen, Dieter, W-5603 Wülfrath (DE); Böhme, Joachim, W-5800 Hamburg-Norderstedt (DE)
(74) Representative: Benson, John Everett

(56) References cited:
- EP-A- 0 288 808
- EP-A- 0 341 027
- FR-A- 2 517 076
- FR-A- 2 559 277
- FR-A- 2 586 827
- US-A- 4 846 565
- US-A- 4 976 510
- PATENT ABSTRACTS OF JAPAN, vol. 7, no. 290 (P-245)(1435), 24 December 1983; & JP - A - 58162918

## Description

The invention relates to a fibre optic distribution and termination device.

Many designs of such dividing devices are known. One such device for connecting to a subscriber line is described in EP-0 288 808-A2. It comprises two hinged mating housing planes, one containing a splice plate for the fibres, and the other containing a working reserve of cable. A drawback for the known devices is that it is not possible to connect further dividing devices or subscriber lines selectively to those devices.

Devices for distributing optical fibres of cables are also known. For example, US-4 717 231 describes a distributing box for optical fibres comprising a privotable panel dividing the box into two compartments. Connectors connect a first optical fibre (of a cable passing through holes in a wall of one of the compartments) to a second optical fibre (of a cable passing through holes in a wall of the other of the compartments). Other known solutions are described in DE-A-38 06 136, DE-A-34 28 615, and DE-U-81 09 413.

Another known fibre distribution panel is described in EP-A-0 341 027 according to which a drawer is slidably mounted within a housing carrying optical fibre connectors as well as fibre splice cradles and optical cable storage units. Said drawer has on its front panel connectors for all in coming and out-going fibres so anybody could change the connections on the front panel of the drawer as this front panel is only covered by an unlocked cover which could be easily removed.

Compared with the known solutions, the problem of the present invention is to simplify the mounting of the device itself and, especially, the manipulation of optical fibres. A particular objective of the invention is to enable the user to make connections to further dividing devices or to individual subscriber lines using a single device, without having to make any alterations to the device. The device of the present invention can therefore, in a single device, act as a distribution device (i.e. making connections to further dividing devices) or as a termination device, (e.g. making connections to individual subscriber lines of appliances), or both.

To solve these problems the invention provides a fibre optic distribution and termination device according to claim 1.

According to the invention the user of the device may only use his connection sockets without being able to touch the rest of the device since it is locked up.

The means for locating the fibre splice may be any typical means known to the man skilled in the art, for example a splice cassette. The means for storing reserve fibre is typically an organiser whose function is, for example, to store reserve fibre loops, or fibre pigtails, that is fibres the ends of which are prepared for connection to a subscriber socket.

Using the invention, it is possible to connect selectively further distributor housings or subscriber lines. These operations can be carried out not only as alternatives, that is to say either or, but also simultaneously. The design is such that even in the event of subsequent changes to the connections, the connections that have already made do not have to be altered.

The splice holding means, e.g. a splice cassette, is preferably pluggable into the basic housing body without fastening means.

In the fibre optic distributing devices in which fibres are spliced, it is usual to include reserve lengths of fibre in the device in order, inter alia, to aid manipulation of the fibres during the splicing operation. These reserve lengths are generally stored as loops of fibres in the housing body. Storage means, often known as an organiser, are typically provided to hold the loops in place. According to the present invention the reserve fibre lengths, or at least some of the reserve fibre lengths, are preferably stored in a storage means (e.g. an organiser) that is a separate tray the base of which separates the splice region from the storage region.

Spare fibre may be stored on one or both sides of the splice. In a preferred embodiment according to the invention, fibre on the side of the splice that leads to the subscriber connection is stored on the loose organiser tray. Fibre on the other side of the splice is stored in the base of the housing, i.e. in the same compartment as the splice holding means.

In preferred embodiment the housing body has a closure lid, and when the lid is open a separate, loose, organiser tray, or reserve fibre storage means can be placed in the housing body, which can be held in place in the housing body by closing the lid of the housing body. The loose fibre storage means may be substantially the same size as the base of the housing body, so that it substantially covers that base. As an alternative, the storage means may be in the form of a tray provided with a hinge that can cooperate with the housing. Thus the fibre storage means may be a tray detachably hinged to the housing.

Preferably, where a closure lid is provided, it is provided with subscriber connection sockets.

By using the device according to the invention, all splicing operations and the like in the region of the splice holding means (e.g. the splice cassette) can be carried out first of all. These are typically carried out by lifting the cassette away from the device into a splicing machine, in which fibre splicing is carried out. The splice holding means can then be fixed in place, in the housing body, which may be mounted for example to a wall or in a switch cabinet. The reserve fibres or fibre pigtails can subsequently be secured to the fibre storage means or organiser, which in turn can be fixed to or within the basic body. Finally the connections of the fibre pigtails to the subscriber sockets can be made. Since the organiser or fibre storage means is either loose or detachably hinged to the housing it can easily be removed. Therefore every easy working of the splice region is possible, and no additional clamping or fixing means are required during the work phase, since all required fixing means are being provided directly by the device itself. Handling is therefore easier than in prior art devices such as EP-0288808.

Preferably the fibre storage means or organiser is provided with winding supports for the reserve fibre(s) or pigtail(s). The winding supports can take the form of pipe pieces, winding lugs or winding pins around which the lengths of reserve fibre or the pigtails can be wound to provide a reserve.

Advantageously, when in position in the housing body, the organiser or the fibre storage means can be fastened to the housing by means of a lock. The lock may be provided in the closure lid so that, when the lid is closed, all of the regions of the device that are not the concern of the subscriber or end-user are locked.

In order to retain the fibres or fibre pigtails within the housing after they have been wound onto the organiser or holding element, the separate organiser or reserve fibre storage means may itself be provided with a lid. This organiser lid may be within the outer contour of the housing body. This separate lid region may, but preferably may not, be opened by the subscriber or end user. Alternatively the reserve fibre storage means may be provided with clamps to hold the fibre thereon. In this case a single housing lid is sufficient.

Preferably the housing body also is provided with supports around which sections of both the incoming and outgoing optical fibre cable and/or lengths of reserve fibre can be wound.

The housing body preferably also comprises at least one distributing comb for incoming or outgoing cables. The use of a distributing comb for outgoing cables is especially advantageous when lengths of optical fibre cables are passed from the splice holding means (e.g. splice cassette) out of the basic body directly into adjacent housing bodies of similar devices, where two or more devices are arranged side by side.

The entries and outlets for incoming and outgoing cables may be provided on different sides of the housing body. These entries can be opened or closed on site, for example by means of plug-in closures, depending upon the requirements.

Where the subscriber connection sockets are provided on the housing closure lid, a further cover which is hinged to the closure lid itself may be provided to protect the socket. This may or may not be lockable from the subscriber.

For some applications, it is desirable to be able to mount a plurality of devices side by side. To achieve this the housing body is preferably provided, on one surface, with at least one dovetail guide or the like which can be placed over a mounting rail on a wall or the like.

In order to make exact positioning possible, whether it be on mounting rails or on a mounting surface, the base of the housing body may also be provided with elongate mounting holes arranged at 90° to each other.

Preferably the entry region of the optical fibre cables into the housing body are provided with fixing projections for the attachment of clamping and strain-relief means for the incoming optical fibre cable.

The invention is described in detail below, by way of example, with reference to the accompanying drawings, in which:
Figure 1 is a three-dimensional view of the device of the invention, in its open state, with the reserve fibre storage element displaced from its mounted position;
Figure 2 shows a detail of the cover region of the device of Figure 1 showing the subscriber sockets in the device;
Figure 3 is a plan view of a partial region of the reserve cable holding element, and
Figure 4 shows a section approximately along the line IV-IV in Figure 3.

The device according to the invention, generally designated 1, comprises a basic body 2 which can be closed by closure lid 3 which is hinged thereto and has a lock 4. It also comprises a splice holding means in the form of a splice cassette 6 and a reserve fibre storage means in the form of an organiser 18, which are both detachably mountable or hingeable in the basic body 2.

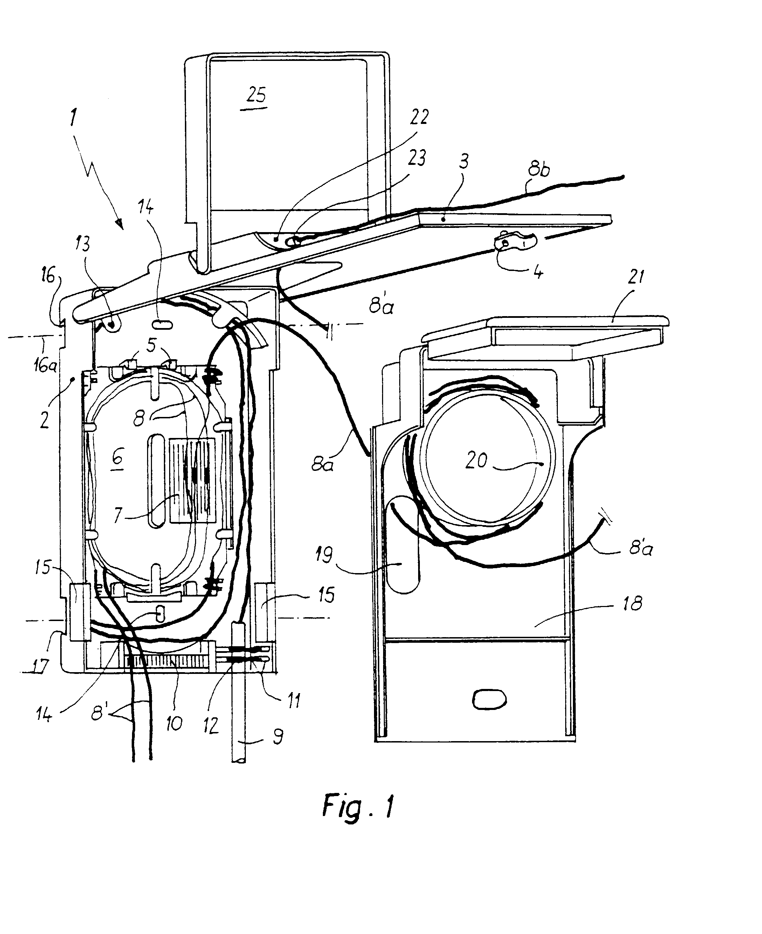

As shown in Figure 1, the splice cassette 6, which is known per se, is snapped into the basic body 2 by means of clamping elements 5. It is otherwise free from fastening means. The splice cassette 6 has a distributing comb 7 for the optical fibres 8 of the incoming optical fibre cable 9. In the figures the thin and thick lines of fibres represent primary and secondary coated fibres respectively. Such coatings are known to the man skilled in the art.

Figure 1 shows that there is provided in the lower region of the basic housing body 2 a distributing and fixing comb 10 for incoming and outgoing optical fibres 8'. These, for example, may be introduced into, or come from, adjacent further devices 1 (not shown).

In order to fix the incoming optical fibre cable 9, slots and fixing projections 11 are provided in the housing so that the incoming optical fibre cable 9 can be fastened there with plastic fixing loops 12.

Figure 1 also shows that the basic housing body 2 also has winding supports 13 for reserve lengths of optical fibre or alternatively for fibre bundles on the incoming side of the splice region.

For mounting the device on a wall or the like, elongate holes 14 oriented at 90° to each other are provided in the base region of the housing.

In order to be able to position the distributing comb 10 at other points in the housing 2, further apertures are provided in the side walls of the housing. These are closed by plug-in pieces 15 as shown in Figure 1. Also shown in Figure 1, in the upper region (as drawn) of the base of the housing body 1, is a dovetail guide 16 and, in the lower region, likewise guide recesses 17. The guides 16 and 17 allow several of such devices to be fastened side by side on mounting rails, on a wall or the like.

A special feature of the present invention resides, inter alia, in the separate means for holding reserve cable, the organiser 18. This is shown displaced from its mounted position in Figure 1 in order to reveal the components of the device. Pigtails of fibre held by that element are designated 8a in Figure 1. Fibre leading to the subscriber from connection socket 23 bears the reference numeral 8b.

The reserve fibre storage means or organiser 18 has a through-opening 19 for passage of the pigtails 8a and winding supports 20 which, in Figure 1, are in the shape of a short section of a pipe.

In order to prevent the pigtails 8a from coming loose after they have been wound around the winding supports 20, there is provided, in the embodiment shown in Figure 1,a lid 21 for the reserve fibre storage means or organiser 18 which can be folded down over the stored fibre. When folded it covers the winding supports 20 at least in part, in such a manner that the pigtails 8a are not able to escape. The invention is not however, limited to this method of retaining the pigtails 8a.

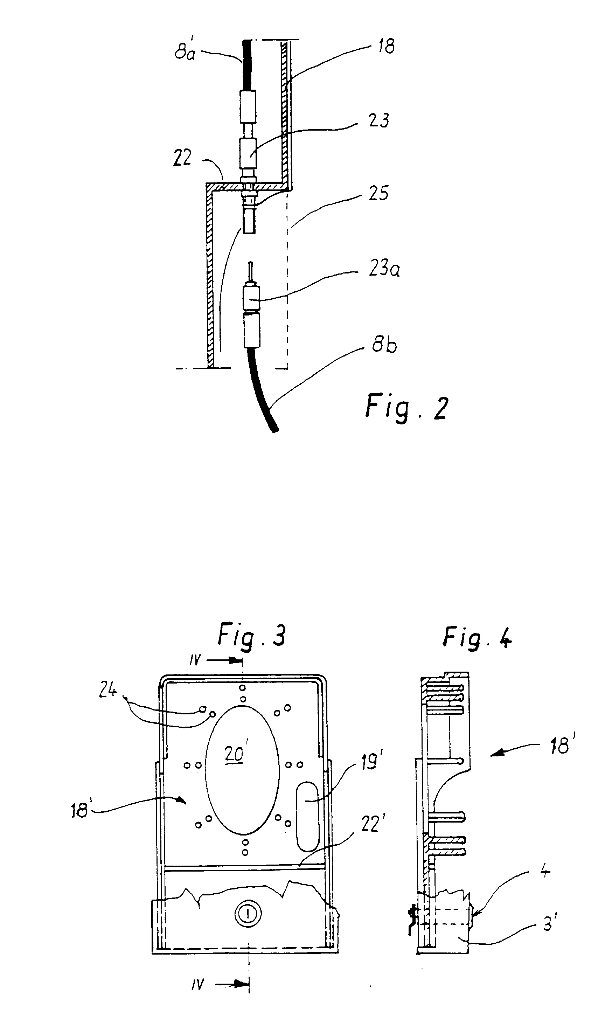

The overall closure lid 3 of the device has, in the example shown, a mounting surface 22 for holding subscriber connection sockets 23. The pigtails 8a can be inserted into these connection sockets 23 from within the device. Then customer connection lines 8b can be connected to the connection sockets 23 outside the device 1. In Figure 1 pigtail 8a' is shown cut off by double lines, leading directly from the splice cassette 6 via the wound reserve of the organiser or holding element 18 to the subscriber connection socket 23 shown in Figure 2.

Figure 2 shows the mounting region of the subscriber connection socket 23 in the lid 3 of the device of Figure 1. The connection line 8b to the subscriber has a plug 23a. Plug 23a can engage in the socket 23 in the housing lid 3. The mounting region can be protected by means of a cover 25, which is indicated by broken lines in Figure 2. This cover 25 may be locked against the subscriber.

Figures 3 and 4 show a plan view and a section, respectively, of the organiser or fibre storage means 18' having a dosure lid 3' arranged in the forward region which is provided with a lock 4. In this case, for simplicity of design, there is no separate lid covering the fibre storage means 18 (i.e. no separate lid 21 as in Figures 1 and 2).

The fibre storage means 18' shown in Figures 3 and 4 is provided with a plurality of pins 24 arranged in pairs and, optionally with a relatively thin oval support ring 20, and/or a correspondingly shaped opening. The wires can be passed through that opening 20', or through an insertion opening 19', which is also indicated in the Figure. Since there is no separate lid 21 covering the fibre storage means 18, additional clamps may be provided to retain the fibre.

The embodiment described above can be modified in various respects without departing from the underlying concept. For example, as described depending upon the method by which the pigtails can be fixed, the lid region 21 on the fibre storage means 18 can be omitted. In that case, the closure lid 3 is made larger in that region. If the closure lid 21 is provided, it can have support shoulders for the closure lid 3 in the closed position. It may also be provided with means against which closure lid 3 can be locked.

Instead of the dovetail guide 16 used to mount the device 1 on rail on a wall or the like, it is also possible to provide on the base region of the basic body 2 an inclined support shoulder. This may be used to effect locking in one direction. For horizontal orientation, fastening holes can be provided in the holding rails. The lower opening 17 can be made larger than the width of the holding rails to enable the housing to be oriented perpendicular to those rails. Owing to the arrangement of the openings 16 and 17 or the elongate holes 14 in the base of the housing, the housing can easily be oriented both horizontally and vertically.

## Claims

1. A fibre optic distribution and termination device (1) comprising:
a housing body (2) having a plurality of ports (10) arranged to allow optical fibre cables (9) and incoming and outgoing optical fibres (8') to pass between the interior and exterior of the housing;
a closure lid (3) having a mounting surface (22) in which optical fibre connection sockets (23) are provided for connection between external subscriber connection lines (8b) and internal subscriber connection pigtails (8a);
and, mounted within the housing body (2),
splice locating means (6) for locating splices connecting between the optical fibres (8) of the optical fibre cables (9), the incoming and outgoing optical fibres (8') and the subscriber connection pigtails (8a), and fibre storage means (18) for storing reserve lengths of optical fibre; the closure lid (3) having a lock (4) for locking the closure lid (3) to the housing body (2) so as to prevent access to the splice locating means (6) and the fibre storage means (18);
the arrangement being such that the device is able to function as a termination device for terminating optical fibres (8) of the optical fibre cables (9) or incoming optical fibres (8') to the subscriber connection lines (8b) via the subscriber connection pigtails (8a) and/or as a distribution device for connecting between the optical fibres (8) of the optical fibre cables (9) and the incoming and outgoing optical fibres (8').

2. A device according to claim 1,
wherein the means for storing reserve fibre (18) is a separate tray for holding reserve lengths of optical fibre (8a), and is itself detachable mountable in the housing body (2).

3. A device according to claim 2,
wherein when the closure lid (3) is closed it fixes the means for storing reserve fibre (18) in position in the housing.

4. A device according to any one of the preceding claims 1 to 3,
wherein the means for storing reserve fibre (18) is provided with its own lid (21), which lies within the outer contour of the basic housing.

5. A device according to claim 4,
wherein when the closure lid (3) of the housing body is closed, the lid (21) of the organiser is also fixed in its closed position.

6. A device according to any one of the preceding claims 1 to 5,
wherein the housing body (2) is provided with at least one distributing comb (10) for incoming and outgoing cables (8',9).

7. A device according to any one of the preceding claims 1 to 6,
wherein fixing projections (11) for the attachment of clamping and strain relief means for an incoming optical fibre cable (9) are provided.

## Patentansprüche

1. Eine Lichtleitfaser-Verteiler- und Anschließvorrichtung (1), umfassend:
einen Gehäusekörper (2) mit einer Vielzahl von Öffnungen (10), die derart angeordnet sind, daß Lichtleitfaserkabel (9) und Eingangs- und Ausgangs-Lichtleitfasern (8') zwischen dem Inneren und dem Äußeren des Gehäuses durchgehen können,
einen Verschlußdeckel (3) mit einer Anbaufläche (33), in der Lichtleitfaserverbindungsbuchsen (23) als Verbindung zwischen externen Teilnehmerverbindungsleitungen (8b) und internen Teilnehmerverbindungsanschlußfasern (8a) vorgesehen sind, und, innerhalb des Gehäusekörpers (2) angebracht,
eine Spleißanordnungseinrichtung (6) zum Anordnen von Spleißen, die eine Verbindung zwischen den Lichtleitfasern (8) der Lichtleitfaserkabel (9), den Eingangs- und Ausgangslichtleitfasern (8') und den Teilnehmerverbindungsanschlußfasern (8a) herstellen, und eine Faseraufspeichereinrichtung (18) zum Speichern von Reservelängen der Lichtleitfaser, wobei der Verschlußdeckel (3) einen Verriegelung (4) aufweist, um den Verschlußdeckel (3) mit dem Gehäusekörper (2) zu verriegeln, um den Zugang zu der Spleißanordnungseinrichtung (6) und der Faserspeichereinrichtung (18) zu verhindern,
wobei die Anordnung eine derartige ist, daß die Vorrichtung fähig ist, als Anschlievorrichtung für das Anschließen der Lichtleitfaserkabel (9) oder Eingangslichtleitfasern (8') zu den Teilnehmerverbindungsleitungen (8b) über die Teilnehmerverbindungsanschlußfasern (8a) und/oder als Verteilervorrichtung als Verbindung zwischen den Lichtleitfasern (8) der Lichtleitfaserkabel (9) und den Eingangs- und Ausgangs-Lichtleitfasern zu wirken.

2. Vorrichtung nach Anspruch 1, dadurch gekennzeichnet, daß die Einrichtung zum Speichern der Reservefaser (18) ein getrenntes Fach zur Aufnahme von Reservelängen der Lichtleitfaser (8a) ist und selbst abnehmbar in dem Gehäusekörper befestigt ist.

3. Vorrichtung nach Anspruch 2, dadurch gekennzeichnet, daß, wenn der Verschlußdeckel geschlossen ist, er die Einrichtung zum Speichern von Reservelichtleitfaser (18) in ihrer Lage in dem Gehäuse fixiert.

4. Vorrichtung nach einem der vorhergehenden Ansprüche 1 bis 3, dadurch gekennzeichnet, daß die Einrichtung zum Speichern der Reservelichtleitfaser (18) mit einem eigenen Deckel (21) versehen ist, der sich innerhalb der Außenkontur des Grundgehäuses befindet.

5. Vorrichtung nach Anspruch 4, dadurch gekennzeichnet, daß, wenn der Verschlußdeckel (3) des Gehäusekörpers geschlossen ist, der Deckel (21) der Organisierungseinrichtung auch in seiner Schließstellung befestigt ist.

6. Vorrichtung nach einem der vorhergehenden Ansprüche 1 bis 5, dadurch gekennzeichnet, daß der Gehäusekörper (2) mit mindestens einem Verteilerkamm (10) für Eingangs- und Ausgangskabel (8', 9) versehen ist.

7. Vorrichtung nach einem der vorhergehenden Ansprüche 1 bis 6, dadurch gekennzeichnet, daß Befestigungsvorsprünge (11) für die Befestigung der Klemm- und Zugentlastungseinrichtung für ein Eingangs-Lichtleitfaserkabel (9) vorgesehen sind.

## Revendications

1. Dispositif (1) de distribution et de terminaison de fibres optiques comprenant :
un corps (2) de boîtier comportant une pluralité d'orifices (10) disposés pour permettre à des câbles (9) de fibres optiques et à des fibres optiques (8') d'entrée et de sortie de passer entre l'intérieur et l'extérieur du boîtier ;
un couvercle (3) de fermeture comportant une surface de montage (22) dans laquelle des fiches de connexion (23) de fibres optiques sont prévues pour réaliser la connexion entre des lignes de connexion (8b) externes d'abonné et des torons de connexion (8a) internes d'abonné ;
et, montés à l'intérieur du corps (2) de boîtier,
des moyens de fixation (6) d'épissure pour fixer les épissures réalisant la connexion entre les fibres optiques (8) des câbles (9) de fibres optiques, les fibres optiques (8') d'entrée et de sortie et les torons (8a) de connexion d'abonné, et des moyens de stockage (18) de fibres pour stocker des longueurs de réserve de fibres optiques ; le couvercle (3) de fermeture comportant un système de verrouillage (4) pour verrouiller le couvercle (3) de fermeture au corps (2) du boîtier afin d'empêcher l'accès aux moyens de fixation d'épissure (6) et aux moyens de stockage (18) de fibres ;
l'agencement étant tel que le dispositif est capable de fonctionner comme un dispositif de terminaison pour terminer des fibres optiques (8) de câbles (9) de fibres optiques ou des fibres optiques (8') d'entrée vers les lignes de connexion (8b) d'abonné, via les torons (8a) de connexion d'abonné et/ou comme un dispositif de distribution pour réaliser la connexion entre les fibres optiques (8) des câbles (9) de fibres optiques et les fibres optiques (8') d'entrée et de sortie.

2. Dispositif selon la revendication 1,
dans lequel les moyens de stockage (18) de fibres de réserve sont un plateau séparé pour maintenir des longueurs de réserve de fibres optiques (8a) et sont eux-mêmes susceptibles d'être montés de manière amovible dans le corps (2) du boîtier.

3. Dispositif selon la revendication 2,
dans lequel, quand le couvercle (3) de fermeture est fermé, il fixe les moyens de stockage (18) de fibres de réserve en position dans le boîtier.

4. Dispositif selon l'une quelconque des revendications précédentes 1 à 3,
dans lequel les moyens de stockage (18) de fibres de réserve sont pourvus de leur propre couvercle (21), qui repose à l'intérieur du contour extérieur du boîtier de base.

5. Dispositif selon la revendication 4,
dans lequel, quand le couvercle (3) de fermeture du corps du boîtier est fermé, le couvercle (21) du dispositif d'organisation est également fixé dans sa position fermée.

6. Dispositif selon l'une quelconque des revendications précédentes 1 à 5,
dans lequel le corps (2) du boîtier est pourvu d'au moins un peigne (10) de distribution pour les câbles d'entrée et de sortie (8', 9).

7. Dispositif selon l'une quelconque des revendications précédentes 1 à 6,
dans lequel des saillies (11) de fixation, destinées à fixer des moyens de serrage et de soulagement de tension pour un câble (9) de fibres optiques d'entrée, sont prévues.
